# EUROPÄISCHE PATENTSCHRIFT

(11) **EP 3 045 795 B1**
(45) Veröffentlichungstag und Bekanntmachung des Hinweises auf die Patenterteilung: **21.02.2018**
(21) Anmeldenummer: 15198597.5
(22) Anmeldetag: 09.12.2015
(51) Int. Cl.: F16L 23/028, F16L 23/18

(54) **ROHRVERBINDUNG**
PIPE CONNECTION
RACCORD DE TUYAUTERIE

(30) Priorität: 19.01.2015 DE 102015200708
(43) Veröffentlichungstag der Anmeldung: 20.07.2016
(73) Patentinhaber: ROBERT BOSCH GMBH, 70442 Stuttgart (DE)
(72) Erfinder: Wouters, Pierre, 5531 EB Bladel (NL); Boer, Thomas, 3028 AA Rotterdam (NL); Heijms, Jan, 568 KE Oirschot (NL)
(74) Vertreter: Thürer, Andreas

(56) Entgegenhaltungen:
- DE-A1- 19 507 853
- DE-U1- 8 618 909
- JP-A- 2013 170 589
- US-A- 1 749 944
- US-A- 4 538 835
- US-A1- 2010 032 945

## Beschreibung

Die Erfindung betrifft eine Rohrverbindung gemäß dem Oberbegriff des Patentanspruchs 1.

Eine Rohrverbindung ergibt sich beispielsweise aus der EP 1 631 763 B1. Die darin beschriebene Rohrverbindung zeigt ein Rohr, einen Klemmflansch und einen Verriegelungsring. Das Rohr weist eine flache Verriegelungsrille auf, die derart ausgestaltet ist, dass der Verriegelungsring darin aufgenommen werden kann. Der Verriegelungsring hat ein Stützelement, das in einen erweiterten Bereich der Verriegelungsrille passt. Der Klemmflansch hat eine zur Verriegelungsrille komplementäre Nut, die sich in axialer Richtung zur Stirnseite des Klemmflansches hin erstreckt und mit der der Klemmflansch am Verriegelungsring anliegt. Mittels einer Mutter / Schraube-Kombination wird der Klemmflansch zur Befestigung des Rohres festgelegt.

Von Nachteil bei dieser Rohrverbindung ist, dass der Verriegelungsring, die Verriegelungsrille im Rohr sowie die komplementäre Nut in der Anlagefläche des Flansches aufgrund ihrer speziellen Form aufwändig herzustellen sind. Die Verriegelungsrille ist zudem sehr flach ausgeführt, was sich auf die Stabilität der Rohrverbindung nachteilig auswirkt.

Die Druckschrift DE 86 18 909 U1 zeigt eine Flanschverbindung für druckbelastbare Heizungsrohre mit an koaxial gegenüberliegend auszurichtenden Rohrstutzen angeordneten und unterschiedlich ausgeführten Flanschen, wobei sich ein Flansch an einem auf einen Rohrstutzen aufgesetzten Zwischenring abstützt und in seiner Umfangsrichtung drehbar angeordnet ist, während ein Verbindungsflansch fest angeordnet ist. Die Abdichtung der Flanschverbindung erfolgt durch eine gekammerte flachdichtende Dichtung. Diese wird zwischen den beiden einander gegenüberliegenden Stirnseiten der Rohrstutzen verspannt und zusätzlich von einem axialen Vorsprung des Zwischenrings in die Ringkammer gedrückt.

Aus der US 1 749 944 A ist eine Rohrverbindung mit an koaxial gegenüberliegend auszurichtenden Rohrenden angeordneten und unterschiedlich ausgeführten Flanschen bekannt, wobei sich ein Flansch an einem auf ein Rohrende aufgesetzten Zwischenring abstützt. Der sich am Zwischenring abstützende Flansch weist eine umlaufende V-förmige Axialrippe in einer stirnseitigen Anlagefläche und der gegenüberliegende Flansch weist in einer Anlagefläche eine komplementäre Nut auf. Außerdem hat der sich am Zwischenring abstützende Flansch eine weitere V-förmige Rippe zwecks Eingriff in eine komplementäre Nut am Zwischenring.

Die in der Durckschrift JP 2013 170589 A verwendete Rohrverbindung weist in einer Ausführungsform an koaxial gegenüberliegend auszurichtenden Rohrenden angeordnete Flansche auf, die sich an auf die Rohrenden aufgesetzte Hülsen abstützen. Zwischen die Rohrenden ist ein Ring eingespannt, der in einem Mittelbereich hohlzylindrisch ausgeführt und jeweils an den Stirnkanten stufenförmige Ausnehmungen zur Aufnahme eines Dichtringes aufweist. Die Dichtringe sind zwischen den Hülsen und den Stirnseiten der Rohrenden eingespannt.

Aus der US 4 538 835 A ist eine Verbindung zum Verbinden eines Rohrs mit einem aufgeweiteten Ende mit einem festen Verbindungsstück gezeigt.

In der US 2010/032945 A1 ist eine Rohrverbindung mit an koaxial gegenüberliegend auszurichtenden Rohrenden angeordneten Flanschen bekannt, die sich jeweils an einer auf das jeweilige Rohrende aufgesetzten konischen Buchse abstützen. Bei der Rohrverbindung erfolgt die Abdichtung der Rohrenden durch einen Dichtring, der in in den Stirnseiten der Rohrenden verlaufenden Axialnuten eingespannt ist.

Dem gegenüber liegt der Erfindung die Aufgabe zu Grunde, eine Rohrverbindung zu schaffen, die kostengünstig hergestellt werden kann und die besonders flexibel, stabil und einfach anwendbar ist.
Diese Aufgabe wird gelöst durch eine Rohrverbindung umfassend ein Rohr, einen Ring, einen Flansch und Befestigungsmitteln, wobei am Ende des Rohrs der radial über das Rohr vorstehende Ring befestigt ist, und wobei der Flansch dazu ausgebildet ist, an einer Anlagefläche des Rings anzuliegen, und wobei die Befestigungsmittel den Flansch zur Befestigung des Rohrendes festlegen und wobei das Rohrende an seinem Außenumfang und der Ring an seinem Innenumfang jeweils einen Gewindeabschnitt aufweisen und dass der Ring mit dem Gewindeabschnitt auf den Gewindeabschnitt des Rohrendes aufgeschraubt ist, mit den Merkmalen des Patentanspruchs 1.
Erfindungsgemäß weist die Rohrverbindung einen Dichtungsträger auf, der hohlzylindrisch ausgeführt ist und mindestens eine Nut zur Aufnahme eines Dichtringes aufweist und der zwischen dem Rohrende und einer dem Rohrende gegenüber liegenden Anschlussfläche angeordnet ist und dass ein Innenradius des Dichtungsträgers einem Innenradius des Rohres entspricht und ein Außenradius des Dichtungsträgers einem Außenradius des Ringes entspricht.
Mit der Erfindung ist der Vorteil verbunden, dass eine Rohrverbindung kostengünstig und einfach hergestellt werden kann. Ein Rohr ist auf beliebige Länge ablängbar und kann mittels einem Gewindeschneider mit einem Gewinde versehen werden. Als Ring mit einem Gewindeabschnitt an seinem Innenumfang kann auf einfache Weise ein kostengünstiges Normteil eingesetzt werden, es ist jedoch auch denkbar, den Ring kostengünstig herzustellen. Damit kann die Ausführung sowohl der Gewindegeometrie als auch der Ringbestimmung z.B. in Abhängigkeit der Wanddicke der Rohre, der Rohrquerschnitte oder des erforderlichen Betriebsdruckes erfolgen. Die Gewindeverbindung kann so ausgelegt sein, dass eine Dichtwirkung durch die Pressung der Gewindeflanken gegeneinander erreicht wird. Je nach Anforderung an die Rohrverbindung kann ein geeignetes Dichtmittel im Gewinde verwendet werden. Die Herstellung größerer Rohrleitungen kann damit flexibel, schnell und einfach vor Ort erfolgen, aufwändige und kostenintensive Schweißarbeiten entfallen.
Die erfindungsgemäße Rohrverbindung hat einen Dichtungsträger, der hohlzylindrisch ausgeführt ist und mindestens eine Nut zur Aufnahme eines Dichtringes aufweist und der zwischen dem Rohrende und einer dem Rohrende gegenüber liegenden Anschlussfläche angeordnet ist. Der Dichtungsträger kann auf einfache Weise und in Abhängigkeit bestimmter Betriebsparameter wie z.B. einer Betriebstemperatur oder eines Betriebsdruckes eigenhergestellt werden oder aus Normteilen bestimmt sein. Der Dichtungsträger dichtet das Rohrende von der Außenseite her ab.
Ein Innenradius des Dichtungsträgers entspricht einem Innenradius des Rohres und ein Außenradius des Dichtungsträgers einem Außenradius des Ringes. Bei einem Festlegen des Klemmflansches werden die Anlageflächen von Dichtungsträger und Rohrende gleichmäßig belastet und dadurch leckfrei abgedichtet. Der Dichtungsträger und der Ring werden durch den über das Rohr vorstehenden Abschnitt des Flansches radial formschlüssig und axial zentriert gehalten.

Vorteilhafte Weiterbildungen der Rohrverbindung sind in den weiteren Unteransprüchen beschrieben.

Bevorzugt weist der Flansch eine zylindrische Durchgangsöffnung auf, die am Innendurchmesser gestuft ist, sodass ein rohrendseitiger Abschnitt des Flansches zur Aufnahme des Rings ausgebildet ist. Der Flansch kann damit auf einfache Weise über den Ring geschoben werden bis er zur Anlage am Ring kommt. Dies ermöglicht einen leichten Ein- und Ausbau des Flansches und unterstützt eine Dichtwirkung.

Wenn der rohrendseitige Abschnitt des Flansches länger als der Gewindeabschnitt am Rohr und/oder am Ring ist, steht der Flansch nach Anlage an dem Ring axial und radial über das Rohr und/oder den Ring vor und bildet damit eine zusätzliche Anlagefläche.

Dadurch dass der axial und radial über das Rohr vorstehende Abschnitt des Flansches als Anschlag für den Dichtungsträger dient, kann dieser auf einfache Weise bezüglich des Rings und des Rohres zentriert gehalten werden. Zudem unterstützt der über das Rohr vorstehende Abschnitt die Dichtwirkung der erfindungsgemäßen Rohrverbindung. Der über das Rohr vorstehende Abschnitt kann hinsichtlich seiner Länge in Abhängigkeit von Betriebsparametern wie z.B. einem Betriebsdruck und/oder der Dicke des Dichtungsträgers variieren.

Gemäß einer vorteilhaften Ausgestaltung weist der Dichtungsträger eine umlaufende Axialnut in einer stirnseitigen Anlagefläche des Dichtungsträgers zur Aufnahme eines Dichtrings auf. Umlaufende Axialnuten können auf einfache Weise hergestellt werden. Der Dichtring ist geschützt in die Axialnut aufgenommen.

Besonders vorteilhaft ist es, wenn ein zweites Rohr vorhanden ist, dass am Rohrende des zweiten Rohres ein Ring aufgeschraubt ist, an dem ein zweiter Flansch anliegt, der mit den Befestigungsmitteln an dem ersten Flansch befestigt ist, wobei zwischen den Rohrenden ein Dichtungsträger, dessen stirnseitige Anlageflächen mit Dichtring führenden Nuten versehen sind, eingespannt ist. So kann ein Rohrpaar einfach und auf kostengünstige Weise an beliebiger bzw. die Verrohrung erforderlich machender Position und schweißlos verbunden werden.

Vorteilhafterweise ist der Dichtungsträger von beiden Flanschen über an den Flanschen ausgebildeten Anlageflächen zentriert gehalten. Damit kann eine Verbindung zweier Rohre besonders einfach und schnell durchgeführt werden.

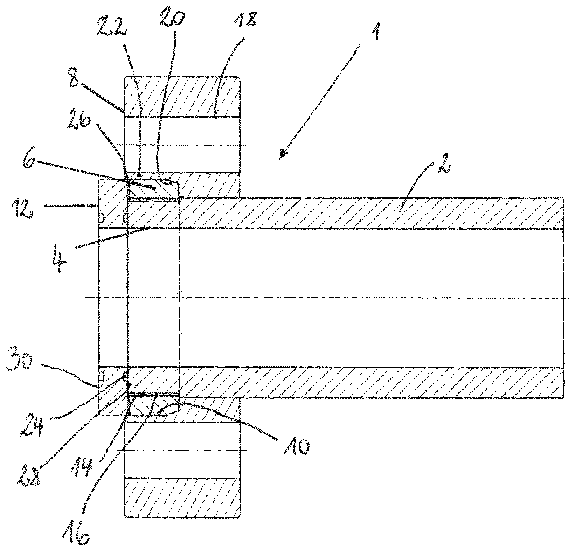

Ein Ausführungsbeispiel einer erfindungsgemäßen Rohrverbindung ist in einer Zeichnung dargestellt. Anhand der Figur 1 wird die Erfindung nun näher erläutert.

Figur 1 zeigt eine Rohrverbindung 1 mit einem Rohr 2, an dessen einem Ende 4 ein radial über das Rohr 2 vorstehender Ring 6 befestigt ist, mit einem Flansch 8, der an einer Anlagefläche 10 des Rings 6 anliegt und einem Dichtungsträger 12. Das Rohrende 4 weist an seinem Außenumfang und der Ring 6 an seinem Innenumfang jeweils einen Gewindeabschnitt 16, 14 auf. Der Gewindeabschnitt 14 des Ringes 6 ist auf den Gewindeabschnitt 16 des Rohrendes 4 aufgeschraubt.

Für in der Figur nicht gezeigte Befestigungsmittel, die den Flansch 8 zur Befestigung des Rohrendes 4 festlegen, sind Bohrlöcher 18 im Flansch 8 angeordnet. Der Flansch 8 weist eine zylindrische Durchgangsöffnung 20 auf, die am Innendurchmesser gestuft ist und als ein rohrendseitiger Abschnitt 22 des Flansches 8 den Ring 6 aufnimmt. Der rohrendseitige Abschnitt 22 des Flansches 8 ist länger als der Gewindeabschnitt 16 am Rohrende 4 und steht axial und radial über das Rohr 2 hervor. Der rohrendseitige Abschnitt 22 ist länger als der Gewindeabschnitt 14 des Rings 6 und steht axial und radial über den Ring 6 vor. Der Dichtungsträger 12 ist hohlzylindrisch ausgeführt und hat mindestens eine Nut 24 zur Aufnahme eines Dichtringes. Der Dichtungsträger 12 dichtet das Rohrende 4 zu einer Außenseite hin ab. Der axial und radial über das Rohr 2 vorstehende Abschnitt 22 des Flansches 8 dient als Anschlag 26 für den Dichtungsträger 12. Die am Dichtungsträger 12 ausgebildete Nut 24 ist eine umlaufende Axialnut in einer stirnseitigen Anlagefläche 28 des Dichtungsträgers 12.
Ein Innenradius des Dichtungsträgers 12 entspricht einem Innenradius des Rohres 2 und ein Außenradius des Dichtungsträgers 12 einem Außenradius des Ringes 6. Der Dichtungsträger 12 liegt mit der Anlagefläche 28 an dem Rohrende 4 an.
Die der Anlagefläche 28 gegenüberliegende Anlagefläche 30 des Dichtungsträgers 12 liegt an einer in Fig.1 nicht gezeigten Anschlussfläche an, diese kann eine ebene Fläche z.B. eine Wand sein, an der der Flansch mittels nicht gezeigten Befestigungsschrauben fixiert ist. Die Anlagefläche 30 des Dichtungsträgers 12 kann auch ein zweites Rohrende sein, das ebenso erfindungsgemäß mit einem Ring und mit einem Flansch ausgeführt ist und die Flansche sind mittels Befestigungsmitteln verschraubt.

## Patentansprüche

1. Rohrverbindung (1) umfassend ein Rohr (2), einen Ring (6), einen Flansch (8) und Befestigungsmitteln, wobei am Ende (4) des Rohrs (2) der radial über das Rohr (2) vorstehende Ring (6) befestigt ist, und wobei der Flansch (8) dazu ausgebildet ist, an einer Anlagefläche (10) des Rings (6) anzuliegen und wobei die Befestigungsmittel den Flansch (8) zur Befestigung des Rohrendes (4) festlegen und wobei das Rohrende (4) an seinem Außenumfang und der Ring (6) an seinem Innenumfang jeweils einen Gewindeabschnitt (16, 14) aufweisen und dass der Ring (6) mit dem Gewindeabschnitt (14) auf den Gewindeabschnitt (16) des Rohrendes (4) aufgeschraubt ist, **dadurch gekennzeichnet, dass** die Rohrverbindung (1) einen Dichtungsträger (12) aufweist, der hohlzylindrisch ausgeführt ist und mindestens eine Nut (24) zur Aufnahme eines Dichtringes aufweist und der zwischen dem Rohrende (4) und einer dem Rohrende (4) gegenüber liegenden Anschlussfläche angeordnet ist und dass ein Innenradius des Dichtungsträgers (12) einem Innenradius des Rohres (2) entspricht und ein Außenradius des Dichtungsträgers (12) einem Außenradius des Ringes (6) entspricht.

2. Rohrverbindung (1) nach Anspruch 1, **dadurch gekennzeichnet, dass** der Flansch (8) eine zylindrische Durchgangsöffnung (20) aufweist, die am Innendurchmesser gestuft ist, sodass ein rohrendseitiger Abschnitt (22) des Flansches (8) zur Aufnahme des Rings (6) ausgebildet ist.

3. Rohrverbindung (1) nach Anspruch 2, **dadurch gekennzeichnet, dass** der rohrendseitige Abschnitt (22) des Flansches (8) länger als der Gewindeabschnitt (16) am Rohr (2) ist, sodass der Flansch (8) nach Anlage an dem Ring (6) axial und radial über das Rohr (2) vorsteht.

4. Rohrverbindung (1) nach Anspruch 2 oder 3, **dadurch gekennzeichnet, dass** der rohrendseitige Abschnitt (22) des Flansches (8) länger als der Gewindeabschnitt (14) am Ring (6) ist, sodass der Flansch (8) nach Anlage an dem Ring (6) axial und radial über den Ring (6) vorsteht.

5. Rohrverbindung (1) nach Anspruch 2, 3 oder 4, **dadurch gekennzeichnet, dass** der axial und radial über das Rohr (2) vorstehende Abschnitt (22) des Flansches (8) als Anschlag (26) für den Dichtungsträger (12) dient.

6. Rohrverbindung (1) nach einem der vorhergehenden Ansprüche, **dadurch gekennzeichnet, dass** der Dichtungsträger (12) eine umlaufende Axialnut (24) in einer stirnseitigen Anlagefläche (28) des Dichtungsträgers (12) zur Aufnahme des Dichtrings aufweist.

7. Rohrverbindung (1) nach einem der vorhergehenden Ansprüche, **dadurch gekennzeichnet, dass** ein zweites Rohr (2) vorhanden ist, dass am Rohrende (4) des zweiten Rohres (2) ein Ring (6) aufgeschraubt ist, an dem ein zweiter Flansch (8) anliegt, der mit den Befestigungsmitteln an dem ersten Flansch (8) befestigt ist, wobei zwischen den Rohrenden (4) ein Dichtungsträger (12), dessen stirnseitige Anlageflächen (28) mit Dichtring führenden Nuten (24) versehen sind, eingespannt ist.

8. Rohrverbindung (1) nach Anspruch 7 , **dadurch gekennzeichnet, dass** der Dichtungsträger (12) von beiden Flanschen (8) über an den Flanschen (8) ausgebildeten Anlageflächen (26) zentriert gehalten ist.

## Claims

1. Pipe connection (1) comprising a pipe (2), a ring (6), a flange (8) and fastening means, the ring (6) which projects radially beyond the pipe (2) being fastened to the end (4) of the pipe (2), and the flange (8) being configured to bear against a bearing face (10) of the ring (6), and the fastening means fixing the flange (8) for fastening the pipe end (4), and the pipe end (4) having, on its outer circumference, and the ring (6) having, on its inner circumference, in each case one threaded section (16, 14), and in that the ring (6) is screwed by way of the threaded section (14) onto the threaded section (16) of the pipe end (4), **characterized in that** the pipe connection (1) has a seal carrier (12) which is of hollow-cylindrical configuration, has at least one groove (24) for receiving a sealing ring, and is arranged between the pipe end (4) and a connector face which lies opposite the pipe end (4), and **in that** an internal radius of the seal carrier (12) corresponds to an internal radius of the pipe (2), and an external radius of the seal carrier (12) corresponds to an external radius of the ring (6).

2. Pipe connection (1) according to Claim 1, **characterized in that** the flange (8) has a cylindrical through-opening (20) which is stepped at the internal diameter, with the result that a pipe end-side section (22) of the flange (8) is configured to receive the ring (6).

3. Pipe connection (1) according to Claim 2, **characterized in that** the pipe end-side section (22) of the flange (8) is longer than the threaded section (16) on the pipe (2), with the result that, after bearing against the ring (6), the flange (8) projects axially and radially beyond the pipe (2).

4. Pipe connection (1) according to Claim 2 or 3, **characterized in that** the pipe end-side section (22) of the flange (8) is longer than the threaded section (14) on the ring (6), with the result that, after bearing against the ring (6), the flange (8) projects axially and radially beyond the ring (6).

5. Pipe connection (1) according to Claim 2, 3 or 4, **characterized in that** that section (22) of the flange (8) which projects axially and radially beyond the pipe (2) serves as a stop (26) for the seal carrier (12).

6. Pipe connection (1) according to one of the preceding claims, **characterized in that** the seal carrier (12) has a circumferential axial groove (24) in an end-side bearing face (28) of the seal carrier (12) for receiving the sealing ring.

7. Pipe connection (1) according to one of the preceding claims, **characterized in that** there is a second pipe (2), **in that** a ring (6) is screwed onto the pipe end (4) of the second pipe (2), against which ring (6) a second flange (8) bears which is fastened by way of the fastening means to the first flange (8), a seal carrier (12), the end-side bearing faces (28) of which are provided with grooves (24) which guide the sealing ring, being clamped in between the pipe ends (4).

8. Pipe connection (1) according to Claim 7, **characterized in that** the seal carrier (12) is held in a centred manner by the two flanges (8) via bearing faces (26) which are configured on the flanges (8).

## Revendications

1. Raccord de tuyauterie (1), comprenant un tuyau (2), un anneau (6), une bride (8) et des moyens de fixation, l'anneau (6), faisant saillie radialement au-delà du tuyau (2), étant fixé à l'extrémité (4) du tuyau (2) et la bride (8) étant réalisée de manière à s'appliquer contre une surface d'application (10) de l'anneau (6) et les moyens de fixation fixant la bride (8) pour la fixation de l'extrémité du tuyau (4) et l'extrémité du tuyau (4) présentant, au niveau de sa périphérie extérieure, et l'anneau (6) présentant, au niveau de sa périphérie intérieure, une portion filetée respective (16, 14), et que l'anneau (6) est vissé par la portion filetée (14) sur la portion filetée (16) de l'extrémité du tuyau (4),
**caractérisé en ce que** le raccord de tuyauterie (1) présente un support d'étanchéité (12) qui est réalisé sous forme cylindrique creuse et qui présente au moins une rainure (24) pour recevoir un anneau d'étanchéité et qui est disposé entre l'extrémité de tuyau (4) et une surface de raccord située à l'opposé de l'extrémité de tuyau (4) et **en ce qu'**un rayon intérieur du support d'étanchéité (12) correspond à un rayon intérieur du tuyau (2) et un rayon extérieur du support d'étanchéité (12) correspond à un rayon extérieur de l'anneau (6).

2. Raccord de tuyauterie (1) selon la revendication 1, **caractérisé en ce que** la bride (8) présente une ouverture de passage cylindrique (20) qui est étagée au niveau du diamètre intérieur de telle sorte qu'une portion du côté de l'extrémité du tuyau (22) de la bride (8) soit réalisée de manière à recevoir l'anneau (6).

3. Raccord de tuyauterie (1) selon la revendication 2, **caractérisé en ce que** la portion du côté de l'extrémité du tuyau (22) de la bride (8) est plus longue que la portion filetée (16) au niveau du tuyau (2) de telle sorte que la bride (8), après l'application contre l'anneau (6), fasse saillie axialement et radialement au-delà du tuyau (2).

4. Raccord de tuyauterie (1) selon la revendication 2 ou 3, **caractérisé en ce que** la portion du côté de l'extrémité du tuyau (22) de la bride (8) est plus longue que la portion filetée (14) au niveau de l'anneau (6) de telle sorte que la bride (8) fasse saillie axialement et radialement au-delà de l'anneau (6) après l'application contre l'anneau (6) .

5. Raccord de tuyauterie (1) selon la revendication 2, 3 ou 4,
**caractérisé en ce que** la portion (22) de la bride (8) faisant saillie axialement et radialement au-delà du tuyau (2) sert de butée (26) pour le support d'étanchéité (12).

6. Raccord de tuyauterie (1) selon l'une quelconque des revendications précédentes, **caractérisé en ce que** le support d'étanchéité (12) présente une rainure axiale périphérique (24) dans une surface d'appui frontale (28) du support d'étanchéité (12) pour recevoir l'anneau d'étanchéité.

7. Raccord de tuyau (1) selon l'une quelconque des revendications précédentes, **caractérisé en ce qu'**un deuxième tuyau (2) est prévu, **en ce qu'**à l'extrémité de tuyau (4) du deuxième tuyau (2) est vissé un anneau (6) au niveau duquel s'applique une deuxième bride (8) qui est fixée par les moyens de fixation à la première bride (8), entre les extrémités de tuyau (4) étant serré un support d'étanchéité (12) dont les surfaces d'appui frontales (28) sont pourvues de rainures (24) guidant l'anneau d'étanchéité.

8. Raccord de tuyau (1) selon la revendication 7,
**caractérisé en ce que** le support d'étanchéité (12) est maintenu de manière centrée par les deux brides (8) par le biais de surfaces d'appui (26) réalisées au niveau des brides (8).
